# EUROPEAN PATENT SPECIFICATION

(11) **EP 2 839 213 B1**
(45) Date of publication and mention of the grant of the patent: **05.09.2018**
(21) Application number: 13703926.9
(22) Date of filing: 17.01.2013
(51) Int. Cl.: F22B 17/00, F22B 29/06, F28F 1/00, F22B 37/00, F28F 9/22

(54) **TUBE AND BAFFLE ARRANGEMENT IN A ONCE-THROUGH HORIZONTAL EVAPORATOR**
ROHR- UND BLENDENANORDNUNG IN EINEM HORIZONTALEN EINMALDURCHGANGSVERDAMPFER
CONFIGURATION DE TUBES ET DE DÉFLECTEURS DANS UN ÉVAPORATEUR HORIZONTAL À PASSAGE UNIQUE

(30) Priority: 17.01.2012 US 201261587332 P; 17.01.2012 US 201261587230 P; 17.01.2012 US 201261587428 P; 17.01.2012 US 201261587359 P; 17.01.2012 US 201261587402 P
(43) Date of publication of application: 25.02.2015
(73) Proprietor: General Electric Technology GmbH, 5400 Baden (CH)
(72) Inventor: KUPERNIK, William D., Windsor Locks, Connecticut 06095 (US); CHAPMAN, Paul J., Windsor, Connecticut 06095 (US); PSCHIRER, James D., Enfield, Connecticut 06082 (US); MAGEE, Jeffrey F., Longmeadow, Massachusetts 01106 (US)
(74) Representative: General Electric Technology GmbH
(86) International application number: PCT/US2013/021962
(87) International publication number: WO 2013/109769

(56) References cited:
- GB-A- 865 426
- GB-A- 191 228 236
- US-A- 1 924 850
- US-A1- 2008 104 960
- US-B1- 7 017 529

## Description

### CROSS-REFERENCE TO RELATED APPLICATIONS

This disclosure claims priority to U.S. Provisional Application No. 61/587,332 filed January 17, 2012, U.S. Provisional Application No. 61/587,230 filed January 17, 2012, U.S. Provisional Application No. 61/587,428 filed January 17, 2012, U.S. Provisional Application No. 61/587,359 filed January 17, 2012, and U.S. Provisional Application No. 61/587,402 filed January 17, 2012.

### TECHNICAL FIELD

The present disclosure relates generally to a heat recovery steam generator (HRSG), and more particularly, to a baffle for controlling flow in an HRSG having horizontal and/or inclined tubes for heat exchange.

### BACKGROUND

A heat recovery steam generator (HRSG) is an energy recovery heat exchanger that recovers heat from a hot gas stream. It produces steam that can be used in a process (cogeneration) or used to drive a steam turbine (combined cycle). Heat recovery steam generators generally comprise four major components - the economizer, the evaporator, the superheater and the water preheater. In particular, natural circulation HRSG's contain an evaporator heating surface, a drum, as well as piping to facilitate an appropriate circulation rate in the evaporator tubes. A once-through HRSG replaces the natural circulation components with the once-through evaporator and in doing so offers in-roads to higher plant efficiency and furthermore assists in prolonging the HRSG lifetime in the absence of a thick walled drum.

From US 7, 017, 529 B1 a boiler system in known that uses heat transfer fins to intensify the heat transfer between a hot gas and a working fluid. GB 865426 describes a forced-flow once-through boiler with an upright cylindrical pressure vessel containing boiler heating surfaces which are constituted by two opposed tube banks.

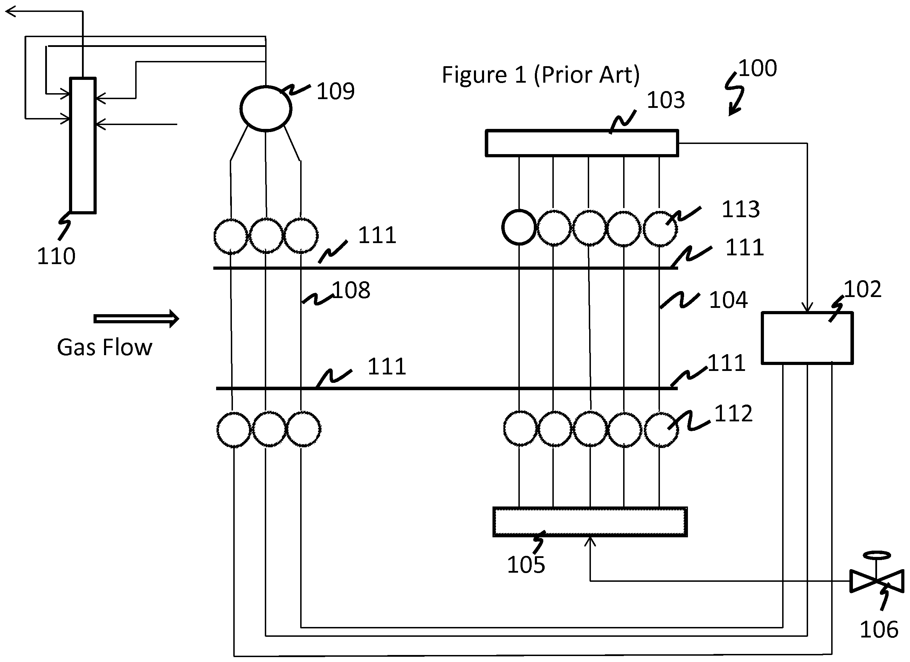

An example of a once through evaporator heat recovery steam generator (HRSG) 100 is shown in the Figure 1. In the Figure 1, the HRSG comprises vertical heating surfaces in the form of a series of vertical parallel flow paths/tubes 104 and 108 (disposed between the duct walls 111) configured to absorb the required heat. In the HRSG 100, a working fluid (e.g., water) is transported to an inlet manifold 105 from a source 106. The working fluid is fed from the inlet manifold 105 to an inlet header 112 and then to a first heat exchanger 104, where it is heated by hot gases from a furnace (not shown) flowing in the
horizontal direction. The hot gases heat tube sections 104 and 108 disposed between the duct walls 111. A portion of the heated working fluid is converted to a vapor and the mixture of the liquid and vaporous working fluid is transported to the outlet manifold 103 via the outlet header 113, from where it is transported to a mixer 102, where the vapor and liquid are mixed once again and distributed to a second heat exchanger 108. This separation of the vapor from the liquid working fluid is undesirable as it produces temperature gradients and efforts have to be undertaken to prevent it. To ensure that the vapor and the fluid from the heat exchanger 104 are well mixed, they are transported to a mixer 102, from which the two phase mixture (vapor and liquid) are transported to another second heat exchanger 108 where they are subjected to superheat conditions. The second heat exchanger 108 is used to overcome thermodynamic limitations. The vapor and liquid are then discharged to a collection vessel 109 from which they are then sent to a separator 110, prior to being used in power generation equipment (e.g., a turbine). The use of vertical heating surfaces thus has a number of design limitations.

Due to design considerations, it is often the case that thermal head limitations use an additional heating loop in order to achieve superheated steam at the outlet. Often times, additional provisions are needed to remix water/steam bubbles prior to re-entry into the second heating loop, leading to additional design considerations. In addition, there exists a gas-side temperature imbalance downstream of the heating surface as a direct result of the vertically arranged parallel tubes. These additional design considerations utilize additional engineering design and manufacturing, both of which are expensive. These additional features also necessitate periodic maintenance, which reduces time for the productive functioning of the plant and therefore result in losses in productivity. It is therefore desirable to overcome these drawbacks.

In addition, when a number of vertical tube sections (having vertical tubes) are placed next to one another, a substantial portion of the hot gases pass through the gaps between adjacent vertical sections without contacting the tube surfaces. This results in a loss of heat. It is therefore desirable to minimize the loss of heat due to the unrestricted flow of hot gases through open spaces between evaporator sections.

### SUMMARY

The invention is defined by the claims, to which reference should now be made.

### BRIEF DESCRIPTION OF THE DRAWINGS

Referring now to the Figures, which are exemplary embodiments, and wherein the like elements are numbered alike:
Figure 1 is a schematic view of a prior art heat recovery steam generator having vertical heat exchanger tubes;
Figure 2 depicts a schematic view of an exemplary once-through evaporator that uses a counterflow staggered arrangement;
Figure 3 depicts an exemplary embodiment of a once-through evaporator;
Figure 4(A) depicts one exemplary arrangement of the tubes in a tube stack of a once-through evaporator;
Figure 4(B) depicts an isometric view of an exemplary arrangement of the tubes in a tube stack of a once-through evaporator;
Figure 5 depicts a by-pass problem that occurs when no baffles are present in the passage between tube stacks that are vertically aligned on one another;
Figure 6 depicts a mal-distribution problem that occurs when an improperly designed baffle is used in the passage between tube stacks;
Figure 7(A) is an exemplary depiction of a tube stack with a baffle system disposed in a gap between two adjacent tube stacks;
Figure 7(B) is an exemplary depiction of a tube stack with a baffle system that is a depiction of section A-A' from the Figure 7(A);
Figure 7(C) is an exemplary depiction of a baffle system that is a depiction of section B-B' from the Figure 7(B);
Figure 8 is an exemplary depiction of the hot gas distribution in a once-through evaporator system that contains the baffle system; and
Figure 9 shows a once-through evaporator having 10 vertically aligned tube stacks that contain tubes through which hot gases can pass in order to transfer their heat to the working fluid.

### DETAILED DESCRIPTION

Disclosed herein is a heat recovery steam generator (HRSG) that comprises a plurality of heat exchanger sections (hereinafter tube stacks) whose tubes are arranged to be "non-vertical". The tube stacks have a baffle disposed between them. The baffle redirects the hot gases into the tube stacks. This facilitates improved heat transfer from the hot gases to a working fluid that travels in the tube stacks.

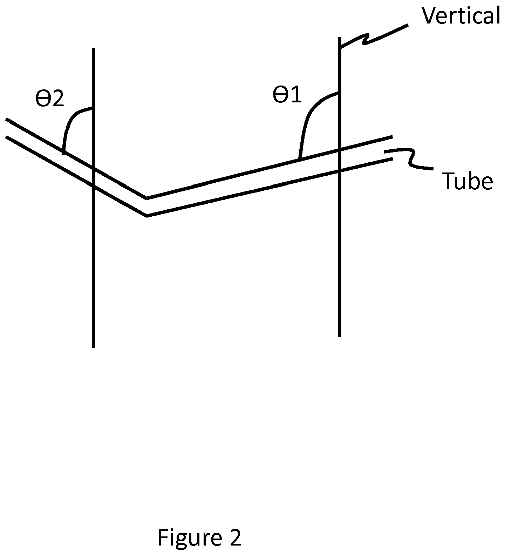

By non-vertical, it is implied the tubes are inclined at an angle to a vertical. By "inclined", it is implied that the individual tubes are inclined at an angle less than 90 degrees or greater than 90 degrees to a vertical line drawn across a tube. In one embodiment, the tubes can be horizontal in a first direction and inclined in a second direction that is perpendicular to the first direction. These angular variations in the tube along with the angle of inclination are shown in the Figure 2. The Figure 2 shows a section of a tube that is employed in a tube stack of the once-through evaporator. The tube stack shows that the tube is inclined to the vertical in two directions. In one direction, it is inclined at an angle of θ1 to the vertical, while in a second direction it is inclined at angle of θ2 to the vertical. In the Figure 2, it may be seen that θ1 and θ2 can vary by up to 90 degrees to the vertical. If the angle of inclination θ1 and θ2 are equal to 90 degrees, then the tube is stated to be substantially horizontal. If on the other hand only one angle θ1 is 90 degrees while the other angle θ2 is less than 90 degrees or greater than 90 degrees but less than 180 degrees, then the tube is said to be horizontal in one direction while being inclined in another direction. In yet another embodiment, it is possible that both θ1 and θ2 are less than 90 degrees or greater than 90 degrees but less than 180 degrees, which implies that the tube is inclined in two directions. It is to be noted that by "substantially horizontal" it is implies that the tubes are oriented to be approximately horizontal (i.e., arranged to be parallel to the horizon within ±2 degrees). For tubes that are inclined, the angle of inclination θ1 and/or θ2 generally vary from about 30 degrees to about 88 degrees with the vertical. In other words, they can vary from 3 degrees to 60 degrees to the horizontal.

The section (or plurality of sections) containing the horizontal tubes is also termed a "once-through evaporator", because when operating in subcritical conditions, the working fluid (e.g., water, ammonia, or the like) is converted into vapor gradually during a single passage through the section from an inlet header to an outlet header. Likewise, for supercritical operation, the supercritical working fluid is heated to a higher temperature during a single passage through the section from the inlet header to the outlet header.

The once-through evaporator (hereinafter "evaporator") comprises parallel tubes that are disposed non-vertically in at least one direction that is perpendicular to the direction of flow of heated gases emanating from a gas turbine, furnace or boiler.

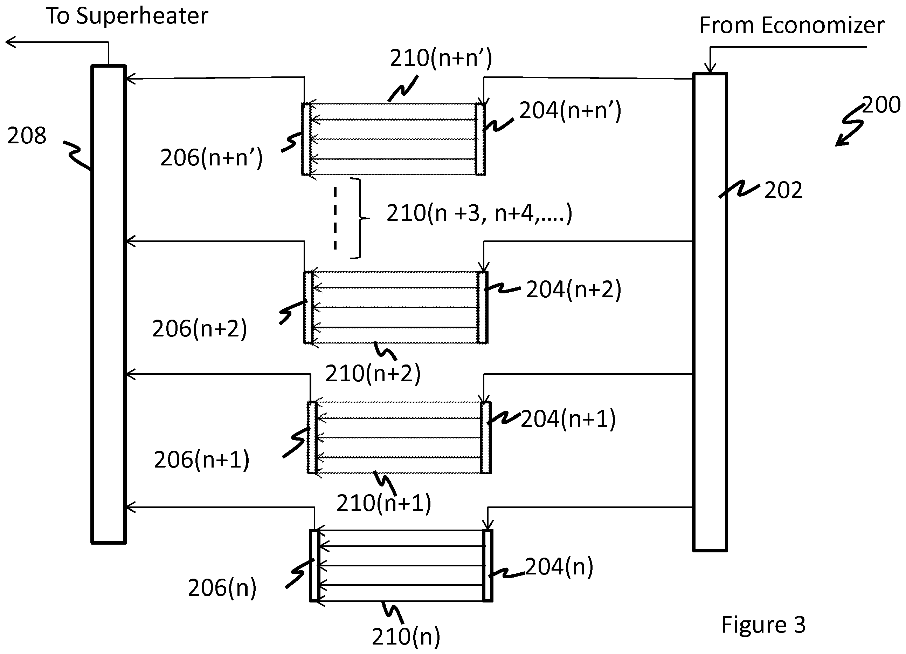

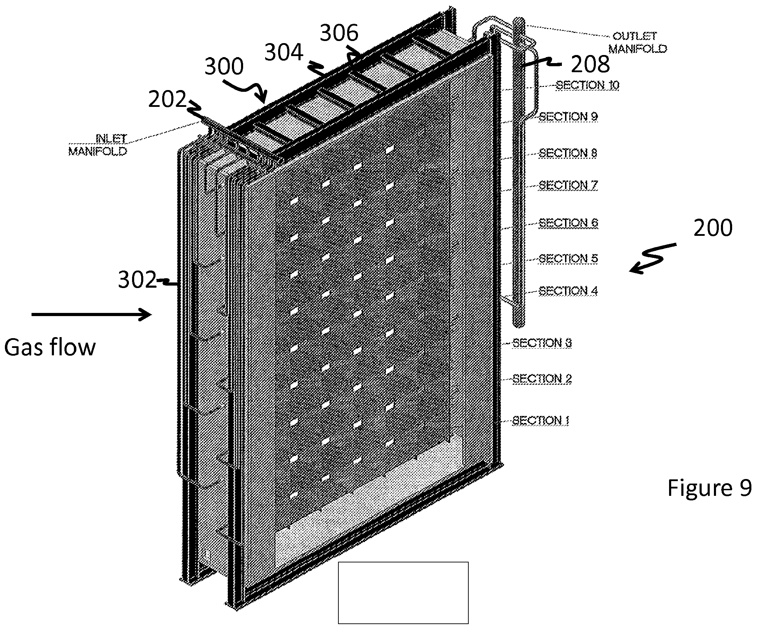

The Figures 3 and 9 depict an exemplary embodiment of a once-through evaporator. The Figure 3 depicts a plurality of vertical tube stacks in a once-through evaporator 200. In one embodiment, the tube stacks are aligned vertically so that each stack is either directly above, directly under, or both directly above and/or directly under another tube stack. The evaporator 200 comprises an inlet manifold 202, which receives a working fluid from an economizer (not shown) and transports the working fluid to a plurality of inlet headers 204(n), each of which are in fluid communication with vertical tube stacks 210(n) comprising one or more tubes that are substantially horizontal. The fluid is transmitted from the inlet headers 204(n) to the plurality of tube stacks 210(n). For purposes of simplicity, in this specification, the plurality of inlet headers 204(n), 204(n+1) ..... and 204(n+n'), depicted in the figures are collectively referred to as 204(n). Similarly the plurality of tube stacks 210(n), 210(n+1), 210(n+2).... and 210(n+n') are collectively referred to as 210(n) and the plurality of outlet headers 206(n), 206(n+1), 206(n+2)......... and 206(n+n') are collectively referred to as 206(n).

As can be seen in the Figure 3, multiple tube stacks 210(n) are therefore respectively vertically aligned between a plurality of inlet headers 204(n) and outlet headers 206(n). Each tube of the tube stack 210(n) is supported in position by a plate (not shown). The working fluid upon traversing the tube stack 210(n) is discharged to the outlet manifold 208 from which it is discharged to the superheater. The inlet manifold 202 and the outlet manifold 208 can be horizontally disposed or vertically disposed depending upon space requirements for the once-through evaporator. The Figure 2 shows a vertical inlet manifold.

The hot gases from a source (e.g., a furnace or boiler) (not shown) travel perpendicular to the direction of the flow of the working fluid in the tubes 210. The hot gases flow into the plane of the paper or out of the plane of the paper in the Figure 3. In one embodiment, the hot gases travel counterflow to the direction of travel of the working fluid in the tube stack. Heat is transferred from the hot gases to the working fluid to increase the temperature of the working fluid and to possibly convert some or all of the working fluid from a liquid to a vapor. Details of each of the components of the once-through evaporator are provided below.

As seen in the Figure 3, the inlet header comprises one or more inlet headers 204(n), 204(n+1) ..... and (204(n) (hereinafter represented generically by the term "204(n)"), each of which are in operative communication with an inlet manifold 202. In one embodiment, each of the one or more inlet headers 204(n) is in fluid communication with an inlet manifold 202. The inlet headers 204(n) are in fluid communication with a plurality of horizontal tube stacks 210(n), 210(n+1), 210(n'+2).... and 210(n) respectively ((hereinafter termed "tube stack" represented generically by the term "210(n)"). Each tube stack 210(n) is in fluid communication with an outlet header 206(n). The outlet header thus comprises a plurality of outlet headers 206(n), 206(n+1), 206(n+2)...... and 206(n), each of which is in fluid communication with a tube stack 210(n), 210(n+1), 210(n+2).... and 210(n) and an inlet header 204(n), 204(n+1), (204(n+2)..... and (204(n) respectively.

The terms 'n" is an integer value, while "n'" can be an integer value or a fractional value. n' can thus be a fractional value such as 1/2, 1/3, and the like. Thus for example, there can therefore be one or more fractional inlet headers, tube stacks or outlet headers. In other words, there can be one or more inlet headers and outlet headers whose size is a fraction of the other inlet headers and/or outlet headers. Similarly there can be tube stacks that contain a fractional value of the number of tubes that are contained in the other stack. It is to be noted that the valves and control systems having the reference numeral n' do not actually exist in fractional form, but may be downsized if desired to accommodate the smaller volumes that are handled by the fractional evaporator sections.

In one embodiment, the once-through evaporator can comprise 2 or more inlet headers in fluid communication with 2 or more tube stacks which are in fluid communication with 2 or more outlet headers. In another embodiment, the once-through evaporator can comprise 5 or more inlet headers in fluid communication with 5 or more tube stacks which are in fluid communication with 5 or more outlet headers. In yet another embodiment, the once-through evaporator can comprise 10 or more inlet headers in fluid communication with 10 or more tube stacks which are in fluid communication with 10 or more outlet headers. There is no limitation to the number of tube stacks, inlet headers and outlet headers that are in fluid communication with each other and with the inlet manifold and the outlet manifold. Each tube stack is sometimes termed a zone.

The Figure 9 depicts another assembled once-through evaporator. The Figure 9 shows a once-through evaporator having 10 vertically aligned tube stacks 210(n) that contain tubes through which hot gases can pass to transfer their heat to the working fluid. The tube stacks are mounted in a frame 300 that comprises two parallel vertical support bars 302 and two horizontal support bars 304. The support bars 302 and 304 are fixedly attached or detachably attached to each other by welds, bolts, rivets, screw threads and nuts, or the like.

Disposed on an upper surface of the once-through evaporator are rods 306 that contact the plates 250. Each rod 306 supports the plate and the plates hang (i.e., they are suspended) from the rod 306. The plates 250 (as detailed above) are locked in position using clevis plates. The plates 250 also support and hold in position the respective tube stacks 210(n). In this Figure 9, only the uppermost tube and the lowermost tube of each tube tack 210(n) is shown as part of the tube stack. The other tubes in each tube stack are omitted for the convenience of the reader and for clarity's sake.

Since each rod 306 holds or supports a plate 250, the number of rods 306 are therefore equal to the number of the plates 250. In one embodiment, the entire once-through evaporator is supported and held-up by the rods 306 that contact the horizontal rods 304. In one embodiment, the rods 306 can be tie-rods that contact each of the parallel horizontal rods 304 and support the entire weight of the tube stacks. The weight of the once-through evaporator is therefore supported by the rods 306.

Each section is mounted onto the respective plates and the respective plates are then held together by tie rods 300 at the periphery of the entire tube stack. A number of vertical plates support these horizontal heat exchangers. These plates are designed as the structural support for the module and provide support to the tubes to limit deflection. The horizontal heat exchangers are shop assembled into modules and shipped to site. The plates of the horizontal heat exchangers are connected to each other in the field.

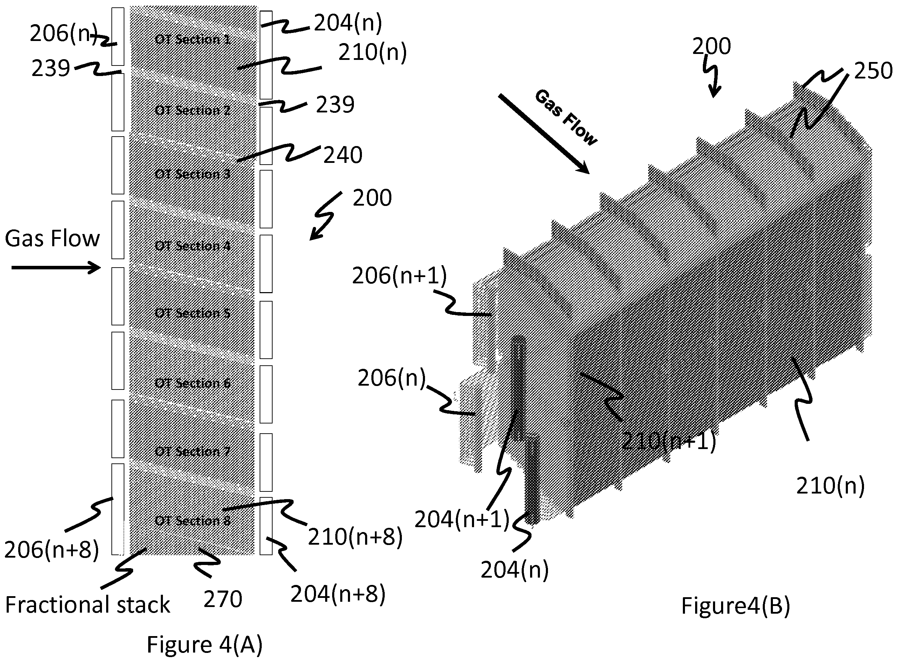

The tubes in each tube stack are serpentine as shown in the Figures 4(A) and 4(B) below. The Figures 4(A) and 4(B) depict one exemplary arrangement of the tubes in a tube stack of a once-through evaporator 200. The nomenclature adopted in the Figures 4(A) and 4(B) is the same as that described previously in the Figure 3 and hence will not be repeated here. In the Figure 4(A) a once through evaporator 200 having 8 tube stacks (referred to as tube sections) are vertically aligned. The tube stacks have a passage 239 between successive stacks through which the hot gases pass unimpeded. As will be discussed shortly, this is problematic because it results in the heat being unused resulting in a decrease in efficiency of the once-through evaporator. The Figure 4(B) is an isometric view of the lower two tube stacks. In the Figure 4(B), 2 tube sections are supported by 7 metal plates 250.

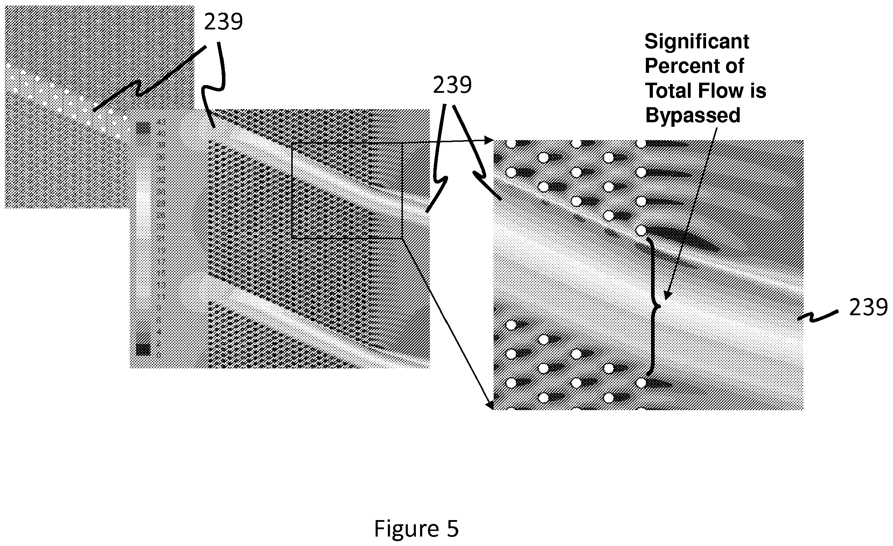

The Figure 5 depicts the problem when no baffles are present in the passage 239 between tube stacks that are vertically aligned on one another. As can be seen the hot gases pass directly through the passage without interacting with the tubes of the tube stack 210(n). Significant hot gas bypass thus occurs resulting in reduced efficiency.

Similarly, if a poorly designed distributive element were to be placed in the passage, non-uniform flow distribution would occur in the tube stacks.

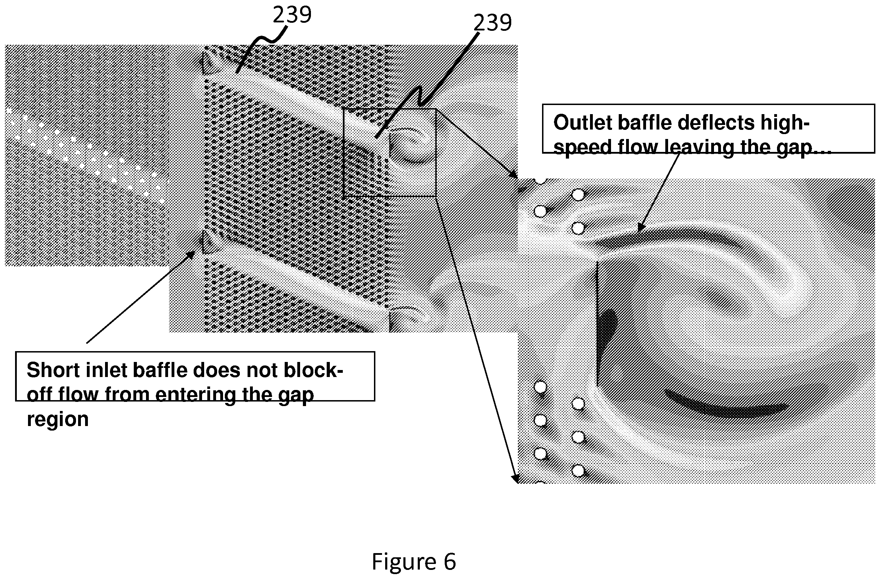

In one embodiment, depicted in the Figure 6, a short inlet baffle and outlet baffle may be placed at the beginning of the passage 239 and at the end of the passage 239 respectively. The short baffles do not successfully block-off hot gases from entering the passage. The outlet baffle placed at the outlet of the baffle deflects high-speed flow leaving a gap in the flow of the hot gases. The use of only one or two baffles (as depicted in the Figure 6) produces some deflection of gases into the tube stacks surrounding the passage 239. However it is desirable for a well-designed baffle system to mitigate gas bypass and at the same time facilitate uniform distribution of hot gases in the tube stack so as to maintain a staggered and counterflow heat transfer in the tube stack.

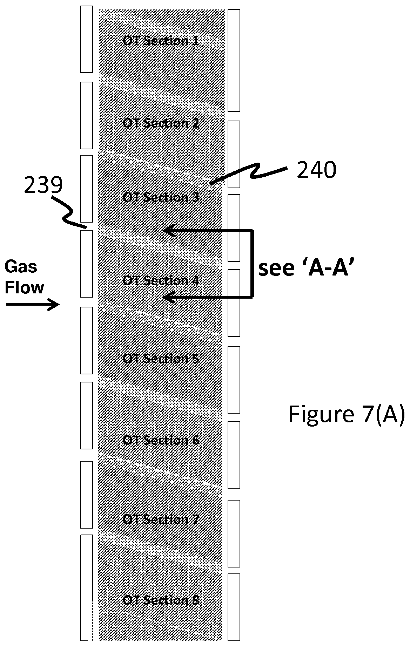

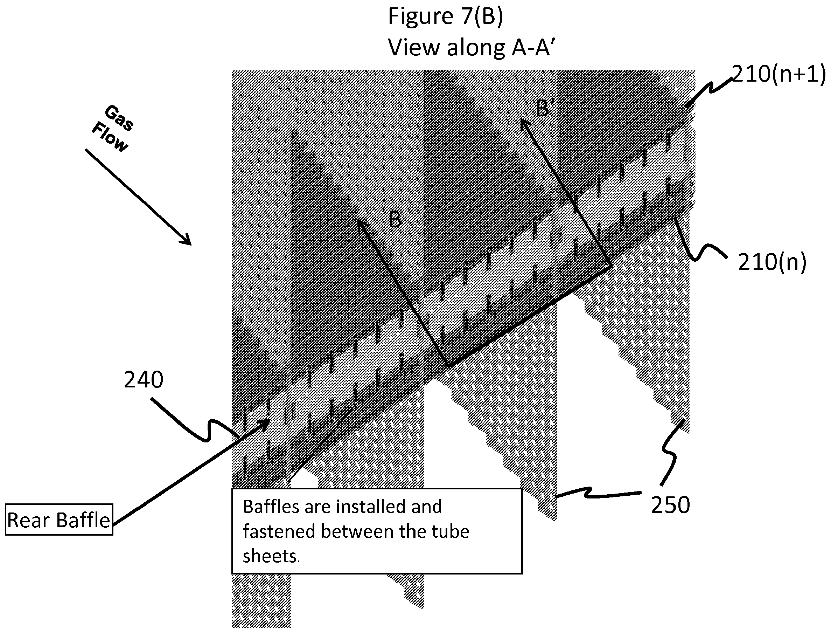

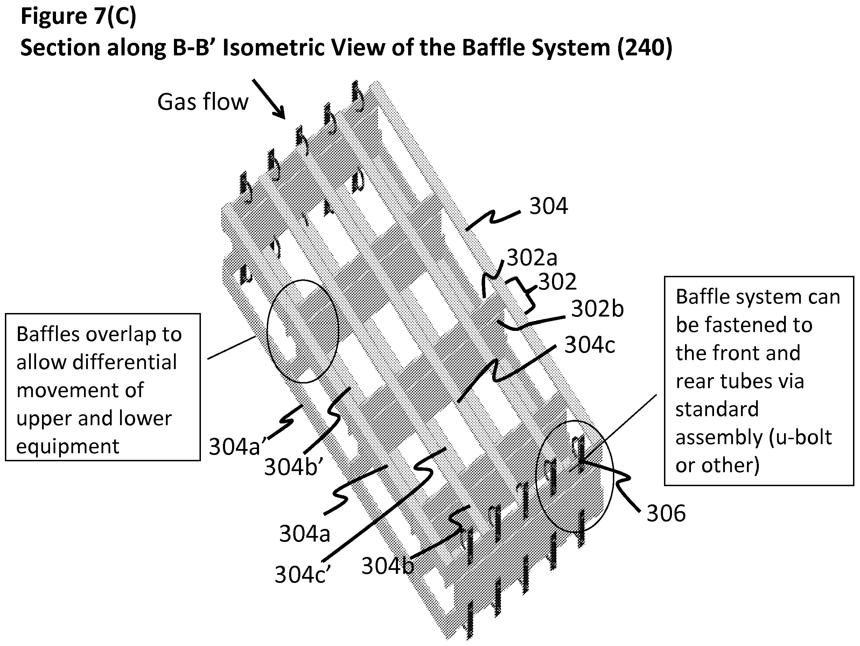

The Figure 7(A) depicts a tube stack 200 that contains the passage 239 into which a baffle system 240 that comprises a plurality of baffles 302 (see Figure 7(C)) are placed as clearly depicted in the Figure 7(B). The Figure 7(B) is a depiction of section A-A' of the Figure 7(A), while the Figure 7(C) is a depiction of the baffle system 240 as seen in the section B-B' of the Figure 7(B). As can be seen the Figure 7(B), the baffle system 240 is disposed between two tube stacks 210(n+1) and 210(n). The baffle system 240 is installed and fastened between a pair of metal plates 250 (that also support the tubes of the tube stacks). The fastening may be accomplished by nuts, bolts, screws, welds and the like if desired. The number of baffle systems 240 is therefore less than or equal to the number of metal plates 250 that are used to support the tube stacks. In an exemplary embodiment, the number of baffle systems 240 is generally one less than the number of metal plates that are used to support the tube stacks.

The baffle system 240 is also provided with clips 306 by which they can be fastened to the lowest tube of the upper stack 210(n+1) and the uppermost tube of the lower stack 210(n). The clips 306 can be u-bolts or some other type of fastener. All bolts and other types of fasteners must be capable of surviving the temperature of operation of the once-through evaporator. As can be seen in the Figures 7(B) and 7(C), a plurality of clips 306 are used to attach each baffle system 240 to the lowest tube of the upper tube stack 210(n+1) and the uppermost tube of the lower tube stack 210(n).

Details of the baffle system 240 are shown in the Figure 7(C). The baffle system 240 comprises a plurality of baffles 302 that are either fixedly attached or flexibly attached to a frame 304. Additionally, baffles can be individually installed and/or installed by some other means. The flexible attachment permits the baffle system 240 to have its angles changed in order to change the distribution of hot gases through the tube stack. The frame 304 comprises a plurality of parallel rods 304a, 304a', 304b, 304b', 304c, 304c', and so on, that are welded to the plurality of baffles 302 to form the baffle system. The rods 304a, 304b, 304c, and so on, are parallel to each other and lie on the upper side of the plurality of baffles 302, while the rods 304a', 304b', 304c', and so on are parallel to each other and lie on the lower side of the plurality of baffles 302.

As seen in the Figure 7(C), each baffle 302 comprises a set of parallel plates 302a and 302b that are fixedly attached or moveably attached on their upper surfaces to the rods 304a, 304b and 340c, and the like, and on their lower surface to the rods 304a', 304b', and 304c', and the like. The movement of the rods 304a, 304b and 340c relative to the rods 304a', 304b', and 304c' can be used to vary the positions of the baffles. In one embodiment, only the positions of some of the baffles can be varied, while the position of some of the other baffles is fixed. While the plates in the Figure 7(C) are flat, they can also be curved and can be perforated. The perforations can be uniform or distributed.

In another embodiment, the baffles can comprise a single plate or a plurality of plates that are perforated (not shown). These baffles may have a rod, or ribs or bars to reinforce the baffles. The perforation allows for deflection of the hot gases to the tube stacks either above, below or above and below the baffle system. The rods, ribs or reinforcing bars can be on the upstream side or the downstream side of the individual baffles.

In one embodiment, the rods are welded to the plurality of baffles 302. In another embodiment, the rods can be attached to the plurality of baffles 302 by hinges (not shown). This latter arrangement permits the baffles to be angled with respect to the rods. By moving the rods 304a, 304b, 304c, and so on, on one side of the baffles with respect to the rods 304a', 304b', 304c', and so on, on the other side of the baffles, the baffles can be inclined towards the direction from which the hot gases flow or away from the direction from which the hot gases flow. The baffles 302 can be inclined at an angle of 1 to 179 degrees to the vertical. The angle of inclination of the baffles may be the same or different from the inclination of the tube stacks.

The plurality of baffles 302 disposed between the rods can vary depending upon the size of the tube stack. In an exemplary embodiment, there are at least 3 sets of baffles (parallel plates) 302, specifically at least 5 sets of plates, and more specifically at least 6 sets of plates per baffle system 240. In one embodiment, the baffles 302 are equidistantly spaced along the length of the rods. In another embodiment, the baffles 302 are not equidistantly spaced along the length of the rods. The angles between the baffles 302 and the rods 304a, 304b, 30c, etc., can be changed if desired to improve the distribution efficiency.

In one embodiment, the angle of inclination of the baffles may be changed by an actuator (not shown) that is in operative communication with a computer and a sensor (or a plurality of sensors) that is disposed in the once-through evaporator. The actuator can be activated by the reading from the sensor (e.g., a temperature sensor), a load requirement (such as electrical output), and the like. The entire feedback loop comprising the computer, the sensor and the actuator can be automated.

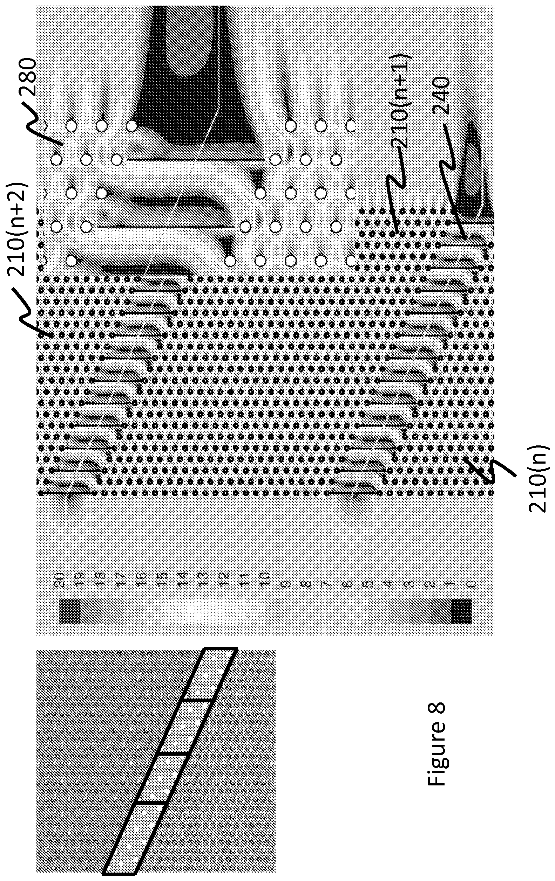

When the baffle system 240 is placed in position in the passage 239 between the tube stacks, the hot gases are uniformly distributed into the tube stack as shown in the Figure 8. The baffle system 240 is disposed in such a manner that the baffles 302 are perpendicular to the flow of the hot gases, while the rods are parallel to the flow direction of the hot gases. From the Figure 8, it can be seen that when the hot gases travel through the passage 239, the baffle system is contacted by the gases and is deflected by the baffles 302 into the tube stack that lies above the baffle system 240. In addition, the Figure 8 shows that the hot gases rising from the lower tube stack 210(n) rises through the baffle system 240 into the upper tube stack 210(n+1). This uniform distribution of the hot gases through the tube stack improves the efficiency of the once-through evaporator. The baffles 302 may also be inclined to redirect the hot gases from the upper tube stack into the lower tube stack. The baffle system 240 does not only have to be placed between two tube stacks, but can also be disposed between a tube stack and a duct wall.

It is to be noted that this application is being co-filed with Patent Applications having Alstom docket numbers W11/122-1, W12/001-0, W11/123-1, W12/093-0, W11/120-1, W12/110-0 and W11/121-0, the entire contents of which are all incorporated by reference herein.

Maximum Continuous Load" denotes the rated full load conditions of the power plant.

"Once-through evaporator section" of the boiler used to convert water to steam at various percentages of maximum continuous load (MCR).

"Approximately Horizontal Tube" is a tube horizontally orientated in nature. An "Inclined Tube" is a tube in neither a horizontal position or in a vertical position, but disposed at an angle therebetween relative to the inlet header and the outlet header as shown.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, singular forms like "a," or "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another elements as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

The term and/or is used herein to mean both "and" as well as "or". For example, "A and/or B" is construed to mean A, B or A and B.

The transition term "comprising" is inclusive of the transition terms "consisting essentially of' and "consisting of' and can be interchanged for "comprising".

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A once-through horizontal evaporator comprising:
an inlet manifold (202);
one or more inlet headers (204) receiving a working fluid; the one or more inlet headers (204) being in fluid communication with the inlet manifold (202)
a plurality of tube stacks (210) disposed vertically wherein a portion of the flow of heated gas passes through each of the tube stacks(210) and the tube stacks (210) are spaced to form a passage (239) therebetween, each tube stack (210) including a plurality of tubes having a serpentine shape with a plurality of horizontal tube portions being in fluid communication with the one or more inlet headers (204); wherein the tubes of each of the tube stacks (210) are stacked vertically and are angled in the direction of the flow of heated gas at an angle of less than 90 degrees or greater than 90 degrees to a vertical and non-vertically;
one or more outlet headers (206) in fluid communication with the plurality of tubes of each of the tube stacks (210);
an outlet manifold (208) in fluid communication with the one or more outlet headers (206) and
a baffle system (240) comprising a plurality of baffles (302); the baffle system (240) being disposed in the passage (239) between the plurality of tube stacks (210) to distribute heated gas flowing from one tube stack (210(n)) to another tube stack (210(n+1)).

2. The once-through evaporator of claim 1, where each of the plurality of tube stacks (210) comprises the horizontal tube portions are substantially horizontal in a direction that is perpendicular to a direction of flow of heated gases and angled in a direction that is parallel to the direction of flow of the heated gases.

3. The once-through evaporator of claim 1, where the baffle system (240) comprises a plurality of rods (304) that are disposed atop and under a plurality of baffles (302).

4. The once-through evaporator of claim 3, where an angle between the rods (304) and the baffles (302) can be varied by varying a position of the rods (304).

5. The once-through evaporator of claim 1, where the baffle system (240) contacts a tube of a tube stack (210 (n+1)) disposed above the baffle system (240) and a tube of a tube stack (210 (n)) disposed below the baffle system (240) ; and where the respective contact occurs via a clip (306) or a u-bolt.

6. The once-through evaporator of claim 3, where an angle between the rods (304) and the baffles (302) is fixed.

7. The once-through evaporator of claim 1, where the baffle system (240) comprises three or more baffles (302).

8. The once-through evaporator of claim 1, where the baffle system (240) comprises five or more baffles (302).

9. The once-through evaporator of claim 1, where the baffle system (240) comprises parallel plates that serve as baffles (302).

10. The once-through evaporator of claim 1, where the baffle system (240) is affixed to the once-through evaporator system between a pair of metal plates (250) that support the tubes of the tube stack (210).

11. The once-through evaporator of claim 10, where the once-through evaporator system comprises a number of baffle systems (240) that is less than or equal to a number of metal plates (250) present in the once-through evaporator system.

12. The once-through evaporator of claim 10, where the once-through evaporator system comprises a number of baffle systems (240) that is always one less than a number of metal plates (250) present in the once-through evaporator system.

13. The once-through evaporator of claim 10, where the baffle system (240) redirects hot gases through a tube section located above it, below it or to tube sections located above and below it.

14. The once-through evaporator of claim 1, where hot gases travel counterflow to the direction of travel of the working fluid in the tube stacks (210).

15. A method comprising:
discharging a working fluid through a once-through horizontal evaporator; where the once-through evaporator comprises:
an inlet manifold (202);
a horizontal duct for passing a flow of heated gas;
one or more inlet headers (204) receiving the working fluid; wherein the one or more inlet headers (204) are in fluid communication with the inlet manifold (202);
tube stacks (210) disposed vertically wherein a portion of the flow of heated gas passes through each of the tube stacks (210), each tube stack (210) including a plurality of tubes having a serpentine shape with a plurality of horizontal tube portions being in fluid communication with the one or more inlet headers (204);
wherein the tubes of each of the tube stacks (210) are stacked vertically and are angled in the direction of the flow of heated gas at an angle of less than 90 degrees or greater than 90 degrees to a vertical and non-vertically;
one or more outlet headers (206) in fluid communication with the plurality of tubes of each of the tube stacks (210);
an outlet manifold (208) in fluid communication with the one or more outlet headers (206) and
a baffle system (240) comprising a plurality of baffles; the baffle system (240) being disposed in the passage between the plurality of tube stack to distribute heated gas flowing from one tube stack (210 (n)) to another tube stack (210 (n+1));
discharging a heated gas through the once-through evaporator; and
transferring heat from the heated gas to the working fluid.

## Patentansprüche

1. Horizontaler Durchlaufverdampfer, umfassend: einen Einlassverteiler (202);
ein oder mehrere Einlasssammelrohre (204), welche ein Arbeitsfluid aufnehmen, wobei das eine oder die mehreren Einlasssammelrohre (204) mit dem Einlassverteiler (202) in fluidischer Verbindung stehen;
eine Mehrzahl von senkrecht angeordneten Rohrbündeln (210), wobei ein Teil des Stroms von erwärmtem Gas durch jedes der Rohrbündel (210) gelangt und die Rohrbündel (210) beabstandet sind, um einen Kanal (239) dazwischen zu bilden, wobei jedes Rohrbündel (210) eine Mehrzahl von Rohren mit gewundener Form umfasst; wobei eine Mehrzahl von horizontalen Rohrabschnitten mit dem einen oder den mehreren Einlasssammelrohren (204) in fluidischer Verbindung stehen; wobei die Rohre von jedem der Rohrbündel (210) senkrecht gestapelt sind und in der Richtung des Stroms von erwärmtem Gas unter einem Winkel von weniger als 90 Grad oder größer als 90 Grad zu einer Senkrechten und nicht senkrecht abgewinkelt sind;
ein oder mehrere Auslasssammelrohre (206), welche mit der Mehrzahl von Rohren von jedem von den Rohrbündeln (210) in fluidischer Verbindung stehen;
einen Auslassverteiler (208) in fluidischer Verbindung mit dem einen oder den mehreren Auslasssammelrohren (206) und
ein Leitblechsystem (240), welches eine Mehrzahl von Leitblechen (302) umfasst; wobei das Leitblechsystem (240) in dem Kanal (239) zwischen der Mehrzahl von Rohrbündeln (210) angeordnet ist, um erwärmtes Gas, welches von einem Rohrbündel (210(n)) zu einem anderen Rohrbündel (210(n+1)) strömt, zu verteilen.

2. Durchlaufverdampfer nach Anspruch 1, bei dem jedes der Mehrzahl von Rohrbündeln (210) die horizontalen Rohrabschnitte umfasst, welche im Wesentlichen horizontal in einer Richtung sind, welche senkrecht zu einer Strömungsrichtung von erwärmten Gasen und abgewinkelt in einer Richtung ist, welche parallel zu der Strömungsrichtung von erwärmten Gasen ist.

3. Durchlaufverdampfer nach Anspruch 1, bei dem das Leitblechsystem (240) eine Mehrzahl von Stangen (304) umfasst, welche auf und unter einer Mehrzahl von Leitblechen (302) angeordnet sind.

4. Durchlaufverdampfer nach Anspruch 3, bei dem ein Winkel zwischen den Stangen (304) und den Leitblechen (302) variiert werden kann, indem eine Position der Stangen (304) variiert wird.

5. Durchlaufverdampfer nach Anspruch 1, bei dem das Leitblechsystem (240) ein Rohr eines Rohrbündels (210 (n+1)), welches über dem Leitblechsystem (240) angeordnet ist, und ein Rohr eines Rohrbündels (210 (n)) berührt, welches unter dem Leitblechsystem (240) angeordnet ist; und bei dem die jeweilige Berührung über einen Clip (306) oder oder eine Bügelschraube erfolgt.

6. Durchlaufverdampfer nach Anspruch 3, bei dem ein Winkel zwischen den Stangen (304) und den Leitblechen (302) fest ist.

7. Durchlaufverdampfer nach Anspruch 1, bei dem das Leitblechsystem (240) drei oder mehr Leitbleche (302) umfasst.

8. Durchlaufverdampfer nach Anspruch 1, bei dem das Leitblechsystem (240) fünf oder mehr Leitbleche (302) umfasst.

9. Durchlaufverdampfer nach Anspruch 1, bei dem das Leitblechsystem (240) parallele Platten umfasst, welche als Leitbleche (302) dienen.

10. Durchlaufverdampfer nach Anspruch 1, bei dem das Leitblechsystem (240) an dem Durchlaufverdampfersystem zwischen einem Paar von Metallplatten (250) befestigt ist, welches die Rohre des Rohrbündels (210) trägt.

11. Durchlaufverdampfer nach Anspruch 10, bei dem das Durchlaufverdampfersystem eine Anzahl von Leitblechsystemen (240) umfasst, welche kleiner als oder gleich einer Anzahl von Metallplatten (250) ist, welche in dem Durchlaufverdampfersystem vorhanden sind.

12. Durchlaufverdampfer nach Anspruch 10, bei dem das Durchlaufverdampfersystem eine Anzahl von Leitblechsystemen (240) umfasst, welche immer um eins kleiner als eine Anzahl von Metallplatten (250) ist, welche in dem Durchlaufverdampfersystem vorhanden sind.

13. Durchlaufverdampfer nach Anspruch 10, bei dem das Leitblechsystem (240) heiße Gase durch einen sich über ihm oder unter ihm befindlichen Rohrabschnitt oder in Rohrabschnitte umleitet, welche sich über und unter ihm befinden.

14. Durchlaufverdampfer nach Anspruch 1, bei dem sich heiße Gase im Gegenstrom zu der Bewegungsrichtung des Arbeitsfluids in den Rohrbündeln (210) bewegen.

15. Verfahren, umfassend:
Abführen eines Arbeitsfluids durch einen horizontalen Durchlaufverdampfer; wobei der Durchlaufverdampfer umfasst:
einen Einlassverteiler (202);
eine horizontale Leitung zum Führen eines Stroms von erwärmtem Gas;
ein oder mehrere Einlasssammelrohre (204), welche das Arbeitsfluid aufnehmen; wobei das eine oder die mehreren Einlasssammelrohre (204) mit dem Einlassverteiler (202) in fluidischer Verbindung stehen;
senkrecht angeordnete Rohrbündel (210), wobei ein Teil des Stroms von erwärmtem Gas durch jedes der Rohrbündel (210) gelangt und jedes Rohrbündel (210) eine Mehrzahl von Rohren mit gewundener Form umfasst, wobei eine Mehrzahl von horizontalen Rohrabschnitten mit dem einen oder den mehreren Einlasssammelrohren (204) in fluidischer Verbindung stehen;
wobei die Rohre von jedem der Rohrbündel (210) senkrecht gestapelt sind und in der Richtung des Stroms von erwärmtem Gas unter einem Winkel von weniger als 90 Grad oder größer als 90 Grad zu einer Senkrechten und nicht senkrecht abgewinkelt sind;
ein oder mehrere Auslasssammelrohre (206), welche mit der Mehrzahl von Rohren von jedem von den Rohrbündeln (210) in fluidischer Verbindung stehen;
einen Auslassverteiler (208) in fluidischer Verbindung mit dem einen oder den mehreren Auslasssammelrohren (206) und
ein Leitblechsystem (240), welches eine Mehrzahl von Leitblechen umfasst;
wobei das Leitblechsystem (240) in dem Kanal zwischen der Mehrzahl von Rohrbündeln angeordnet ist, um erwärmtes Gas, welches von einem Rohrbündel (210(n)) zu einem anderen Rohrbündel (210(n+1)) strömt, zu verteilen;
Abführen eines erwärmten Gases durch den Durchlaufverdampfer; und
Übertragen von Wärme von dem erwärmten Gas auf das Arbeitsfluid.

## Revendications

1. Evaporateur horizontal à passage unique, comprenant:
un distributeur d'entrée (202);
un ou plusieurs collecteur(s) d'entrée (204) recevant un fluide de travail; ledit/lesdits un ou plusieurs collecteur(s) d'entrée (204) étant en communication fluidique avec le distributeur d'entrée (202);
une pluralité de piles de tubes (210) disposées verticalement, dans lequel une partie de l'écoulement de gaz chauffé passe à travers chacune des piles de tubes (210), et les piles de tubes (210) sont espacées de manière à former un passage (239) entre celles-ci, chaque pile de tubes (210) comprenant une pluralité de tubes présentant une forme de serpentin avec une pluralité de parties de tube horizontales en communication fluidique avec ledit/lesdits un ou plusieurs collecteur(s) d'entrée (204); dans lequel les tubes de chacune des piles de tubes (210) sont empilés verticalement et sont inclinés dans la direction de l'écoulement de gaz chauffé à un angle inférieur à 90 degrés ou supérieur à 90 degrés par rapport à une verticale et non verticalement;
un ou plusieurs collecteur(s) de sortie (206) en communication fluidique avec la pluralité de tubes de chacune des piles de tubes (210);
un distributeur de sortie (208) en communication fluidique avec ledit/lesdits un ou plusieurs collecteur(s) de sortie (206); et
un système de déflecteurs (240) comprenant une pluralité de déflecteurs (302); le système de déflecteurs (240) étant disposé dans le passage (239) entre la pluralité de piles de tubes (210) afin de distribuer le gaz chauffé qui s'écoule à partir d'une première pile de tubes (210(n)) jusqu'à une autre pile de tubes (210(n+1)).

2. Evaporateur à passage unique selon la revendication 1, dans lequel chacune de la pluralité de piles de tubes (210) comprend les parties de tube horizontales qui sont sensiblement horizontales dans une direction qui est perpendiculaire à une direction d'écoulement de gaz chauffés et inclinées dans une direction qui est parallèle à la direction d'écoulement des gaz chauffés.

3. Evaporateur à passage unique selon la revendication 1, dans lequel le système de déflecteurs (240) comprend une pluralité de tiges (304) qui sont disposées au-dessus et en dessous d'une pluralité de déflecteurs (302).

4. Evaporateur à passage unique selon la revendication 3, dans lequel un angle entre les tiges (304) et les déflecteurs (302) peut être changé en modifiant une position des tiges (304).

5. Evaporateur à passage unique selon la revendication 1, dans lequel le système de déflecteurs (240) est en contact avec un tube d'une pile de tubes (210(n+1)) qui est disposé au-dessus du système de déflecteurs (240) et avec un tube d'une pile de tubes (210(n)) qui est disposé en dessous du système de déflecteurs (240); et dans lequel le contact respectif se produit par l'intermédiaire d'une attache (306) ou d'un boulon en u.

6. Evaporateur à passage unique selon la revendication 3, dans lequel un angle entre les tiges (304) et les déflecteurs (302) est fixe.

7. Evaporateur à passage unique selon la revendication 1, dans lequel le système de déflecteurs (240) comprend trois déflecteurs (302), ou plus.

8. Evaporateur à passage unique selon la revendication 1, dans lequel le système de déflecteurs (240) comprend cinq déflecteurs (302), ou plus.

9. Evaporateur à passage unique selon la revendication 1, dans lequel le système de déflecteurs (240) comprend des plaques parallèles qui servent de déflecteurs (302).

10. Evaporateur à passage unique selon la revendication 1, dans lequel le système de déflecteurs (240) est fixé au système d'évaporateur à passage unique entre une paire de plaques de métal (250) qui supportent les tubes de la pile de tubes (210).

11. Evaporateur à passage unique selon la revendication 10, dans lequel le système d'évaporateur à passage unique comprend un certain nombre de systèmes de déflecteurs (240) qui est inférieur ou égal à un nombre de plaques de métal (250) présentes dans le système d'évaporateur à passage unique.

12. Evaporateur à passage unique selon la revendication 10, dans lequel le système d'évaporateur à passage unique comprend un certain nombre de systèmes de déflecteurs (240) qui est toujours un de moins qu'un nombre de plaques de métal (250) présentes dans le système d'évaporateur à passage unique.

13. Evaporateur à passage unique selon la revendication 10, dans lequel le système de déflecteurs (240) redirige les gaz chauds à travers une section de tube située au-dessus de celui-ci, en dessous de celui-ci ou vers des sections de tube situées au-dessus et en dessous de celui-ci.

14. Evaporateur à passage unique selon la revendication 1, dans lequel les gaz chauds circulent à contre-courant de la direction de déplacement du fluide de travail dans les piles de tubes (210).

15. Procédé, comprenant les étapes suivantes:
décharger un fluide de travail à travers un évaporateur horizontal à passage unique; dans lequel l'évaporateur à passage unique comprend:
un distributeur d'entrée (202);
un conduit horizontal pour laisser passer un écoulement de gaz chauffé;
un ou plusieurs collecteur(s) d'entrée (204) pour recevoir le fluide de travail; dans lequel ledit/lesdits un ou plusieurs collecteur(s) d'entrée (204) est (sont) en communication fluidique avec le distributeur d'entrée (202);
des piles de tubes (210) disposées verticalement, dans lequel une partie de l'écoulement de gaz chauffé passe à travers chacune des piles de tubes (210), chaque pile de tubes (210) comprenant une pluralité de tubes présentant une forme de serpentin avec une pluralité de parties de tube horizontales en communication fluidique avec ledit/lesdits un ou plusieurs collecteur(s) d'entrée (204); dans lequel les tubes de chacune des piles de tubes (210) sont empilés verticalement et sont inclinés dans la direction de l'écoulement de gaz chauffé à un angle inférieur à 90 degrés ou supérieur à 90 degrés par rapport à une verticale et non verticalement;
un ou plusieurs collecteur(s) de sortie (206) en communication fluidique avec la pluralité de tubes de chacune des piles de tubes (210);
un distributeur de sortie (208) en communication fluidique avec ledit/lesdits un ou plusieurs collecteur(s) de sortie (206); et
un système de déflecteurs (240) comprenant une pluralité de déflecteurs; le système de déflecteurs (240) étant disposé dans le passage entre la pluralité de piles de tubes afin de distribuer le gaz chauffé qui s'écoule à partir d'une première pile de tubes (210(n)) jusqu'à une autre pile de tubes (210(n+1));
décharger un gaz chauffé à travers l'évaporateur à passage unique; et
transférer de la chaleur du gaz chauffé au fluide de travail.
